# EUROPEAN PATENT SPECIFICATION

(11) **EP 3 608 785 B1**
(45) Date of publication and mention of the grant of the patent: **18.02.2026**
(21) Application number: 18188326.5
(22) Date of filing: 09.08.2018
(51) Int. Cl.: G06F 11/36, G06F 11/3668

(54) **KEYWORD-DRIVEN REQUIREMENTS**
SCHLÜSSELWORTGESTÜTZTE ANFORDERUNGEN
EXIGENCES LIÉES AUX MOTS CLÉS

(43) Date of publication of application: 12.02.2020
(73) Proprietor: PiRo Systems Engineering GmbH, 71032 Böblingen (DE)
(72) Inventor: Nicke, Peter, 71032 Böblingen (DE)
(74) Representative: Mzb PartmbB

(56) References cited:
- WO-A2-2007/137082
- US-A1- 2008 109 475
- US-A1- 2008 244 523
- US-A1- 2014 033 175
- US-A1- 2015 278 075
- REINHARD HAMETNER ET AL: "Agile testing concepts based on keyword-driven testing for industrial automation systems", IECON 2012 - 38TH ANNUAL CONFERENCE ON IEEE INDUSTRIAL ELECTRONICS SOCIETY, IEEE, 25 October 2012 (2012-10-25), pages 3727 - 3732, XP032281603, ISBN: 978-1-4673-2419-9, DOI: 10.1109/IECON.2012.6389298
- HUI WU: "GRAMMAR-DRIVEN GENERATION OF DOMAIN-SPECIFIC LANGUAGE TESTING TOOLS USING ASPECTS", PHD DISSERTATION - UNIVERSITY OF ALABAMA, BIRMINGHAM, 1 January 2007 (2007-01-01), BIRMINGHAM, University of ALABAMA, pages 1 - 189, XP055027122, Retrieved from the Internet <URL:http://www.cis.uab.edu/softcom/dissertations/HuiWu.pdf> [retrieved on 20120514]

## Description

### Technical Field

The invention relates to the products and process as per the first portion of the independent claims.

### Background Art

Within the context of programming languages and software testing, by Testing and Test Control Notation (TTCN) is meant a standardized language used to write detailed test specifications. The core language in its latest version, TTCN-3, is standardized by ETSI ES 201 873-1 and recommended by ITU-T Z.161. At ETSI, TTCN-3 has been used to test conformance with the Session Initiation Protocol (SIP) for Voice over IP (VoIP), IPv6, Digital Mobile Radio (DMR), HiperMAN, WiMax, and the 3GPPTM IP Multimedia Subsystem (IMS). Although primarily used in telecommunications, TTCN constitutes the state of the art across multiple industries, its use having spread to automotive, railway, and financial applications.

US 2014/033175 A (LEE CHUNG-I [TW] ET AL) 30.01.2014 discloses a computer-implemented method comprising defining user requirements for testing a software program, syntax keywords of a test script, and a test template for creating test cases driven by the keywords.

US 2015/278075 A (LOGANATHAN BALAJI [US]) 01.10.2015 discloses the use of a database and structured querying.

WO 2007/137082 A (CAPTARIS INC [US]; ROTH RICK R [US]) 29.11.2007 discloses a wizard.

US 2008/244523 (KELSO TIM [US]) 02.10.2008 indicates: "Keywords and natural language are used in test case creation, simplifying the process for non-technical business users".

CN 102929680 A (ISOFT INFRASTRUCTURE SOFTWARE CO., LTD) 13.02.2013 discloses a method, a device and a system for converting a TTCN-3 script into a Java source code to compile the TTCN-3 script. According to the method, a translator of the TTCN-3 script is constructed, analyzes and verifies a test object file, and then translates the TTCN-3 script into a Java file according to predefined translation rules. A Java runtime support library is constructed according to the translation rules of the translator, supports the foundation classes quoted in a translation scheme, and completes the execution of the code generated by translation and the recording of the execution results. The complete Java source code in accordance with a TTCN-3 semanteme can be acquired through the integration of the code translated by the translator and the code of the runtime support library.

Keyword-driven testing is a test case specification approach that is commonly used to support test automation and whose fundamental idea is to provide a set of building blocks - referred to as keywords - that may be used to create manual or automated test cases without detailed knowledge of programming or test tool expertise. Keyword-driven testing aims to provide a basic, unambiguous set of keywords comprehensive enough so that most, if not all, required test cases can be entirely composed of said keywords. The vocabulary included in these dictionaries or libraries of keywords is, therefore, a reflection of the language and level of abstraction used to write the test cases and not of any standard computer programming language. Practical applications may be gathered from HAMETNER, Reinhard, et al. Agile testing concepts based on keyword-driven testing for industrial automation systems. IECON 2012 - 38th Annual Conference on IEEE Industrial Electronics Society. 25.10.2012, p.3727-3732.

### Summary of invention

The invention as claimed is hereinafter disclosed in such a way that the technical problem with which it deals can be appreciated and the solution can be understood.

### Technical Problem

One disadvantage in the use of languages such as TTCN is the length of time required to learn them. Also, many nontechnical users find them unintelligible.

### Solution to Problem

The problem is solved as per the second portion of Claim 1.

### Advantageous effect of invention

The invention combines established syntax rules with an innovative approach to the semantics of specifications without degrading their readability.

### Brief description of drawings

Figure 1 depicts a method as claimed.
Figure 2 depicts a corresponding testing framework.

### Description of embodiments

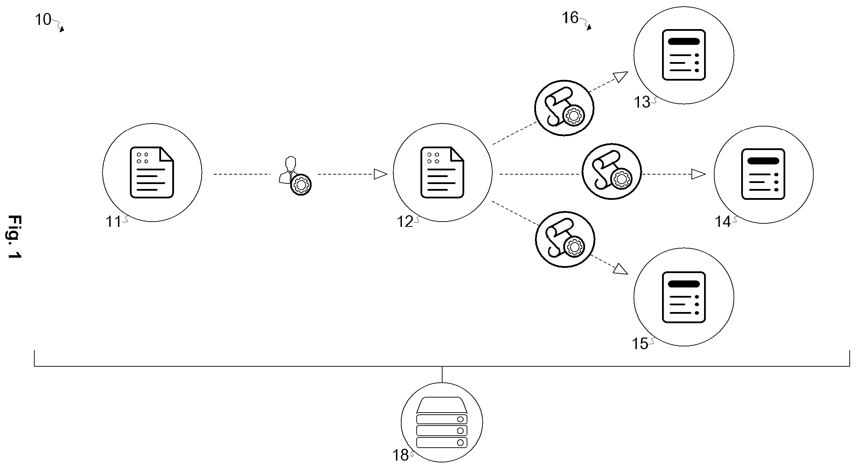

The method (10) illustrated by Figure 1 extends upon the concept of keyword-driven testing by making a general proposal for the realization of the keywords, which in this context are referred to as "phrases". Using these phrases, system states, signals, activities, sequences of actions, etc. can be described easily and clearly. The outlined approach is not limited to creating test specifications (12) but may equally be applied to the specification of requirements (11). Its focus is on readability and ease of use, allowing for the method (10) to be employed directly and efficiently without extensive training or expertise.

In an advanced embodiment, such phrases could even be employed throughout earlier stages of the development process such as to write epics, stories, or use cases.

The proposed notation differs from formal languages in that the vocabulary is unrestricted and may be extended by any user. This creates a living language that constantly evolves and improves.

An underlying database (18) can be filled with any keywords including their corresponding translation into multiple domains (13, 14, 15). Such domains (13, 14, 15) might include, for example, hardware or software "in the loop" (13), vehicle driver instructions (14), messaging (15) over a signal network such as Flexray or Ethernet, or system state.

In addition to the actual keyword, a phrase optionally comprises a class (e. g., "state", "coding", or "parameters"), system (e. g., a specific control unit or "vehicle"), and argument (e. g., the value of a variable). As a result, a fully qualified phrase takes the following form:
"Class::System::KeyWord[Argument]".

For instance, a desired steering angle to be retained as a coding value may be described as follows: "Coding::EPS::SteerAngleThreshold[20°]".

Furthermore, properties to be passed to the class itself may be specified. For example, the system identifier "EPS" describes that the coding refers to the electrical power steering (EPS) control unit and uniquely defines the keyword to follow.

The repository (18) created throughout the specification phase can be easily distributed across project teams, departments, and external cooperation partners along with the actual specification (12). It essentially defines a meta-model, allowing for the concrete syntax and semantics to be adapted to project-specific requirements.

During the development process, this approach enables the translation of requirements (11) into abstract test specifications (12) and, ultimately, test cases (16) for the different domains (13, 14, 15). Transfer from a requirement (11) to the corresponding test specification (12) is supported by the reusability of pertinent phrases, allowing establishment of a one-to-one relationship between both artefacts (11, 12). Even fully automated translation of functional requirements (11) is possible given no more than a few requirement design rules.

If, in a requirement (11), an input variable such as a signal is amended, the corresponding test case (16) may be regenerated "at the push of a button" without introducing significant time delay or resource cost.

The inventive method (10) further supports assessing the quality of requirements (11) and test specifications (12). Based on the syntax and semantics of the proposed language, key performance indicators (KPIs) for evaluation can be defined. This aids users in optimizing specifications (12), avoiding inconsistencies, and managing the overall project according to its established project status.

For instance, requirements entirely composed of known phrases may be defined as high-quality; requirements only partly composed of known phrases may be considered in need of improvement; and requirements devoid of known phrases may be attributed a low or unknown quality. To similar ends, since any parameters used would also be declared as phrases, it could be verified that, on the one hand, the repository contains comprehensive definitions for all those parameters and, on the other hand, that no parameters remain unused throughout the specification in its entirety.

As studies have demonstrated, besides lack of clarity of requirements (11), cumbersome change management processes form one of the main reasons for failure in software projects. An embodiment of the invention significantly simplifies those processes, allowing small changes to a requirement (11) to reflect in the test specifications (12) and test cases (16) without delay.

Even in the face of major changes, existing definitions may usually be maintained. Hence, the keyword-driven approach to specification described herein is predestined to support an agile environment.

As elucidated above, the keywords can be translated into various domains (13, 14, 15), such as from a general test specification (12) into hardware or software "in the loop" (13), driver instructions (14), or bus messaging (15). With manual conversion into these individual domains (13, 14, 15) thus becoming obsolete, costs may be saved, mistakes avoided, and development dynamics increased.

As with established code generators, the structure of the test script implementation can be standardized, programming rules defined, and commentary added automatically. Similarly, bidirectional traceability between test specification and test implementation may be automated.

Since the "vocabulary" employed in complex projects tends to be confusing, tool support is essential in any such endeavor. For ensuring reusability of the phrases, each phrase can be customized using further attributes such as descriptions or search terms. To this end, an autocomplete tool connected to the database (18) makes it easy to find the correct keyword. In a preferred embodiment, the phrases, upon the keywords having been entered, are parameterized by means of a software wizard.

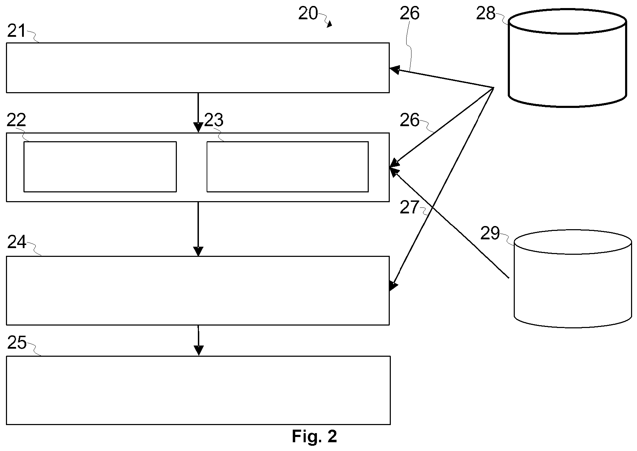

Especially in complex projects, acceptance of a uniform specification language depends on the right tooling (see Figure 2). It is thus fundamental that the work processes followed by a developer are changed as little as possible and the application of a prescribed language does not generate any additional work. With respect to these requirements, a tooling as per the invention fits seamlessly into an existing work and test environment (25) and can be used independently of any application. To achieve this, a wizard is available that overlays the actual application while requirements (11 - Figure 1) are being entered. The wizard itself is a program that automatically completes any partial keywords (26).

A preferred embodiment provides a search function for phrases and examples of their application. After specifying the requirements (11), the wizard automatically transfers any new requirement (11) to the target application and stands by until being invoked again using a convenient key combination. However, the use of tooling remains optional, permitting each user to decide for herself how to enter phrases.

### Industrial applicability

The invention is applicable, inter alia, throughout the electronics, software, and automotive industries.

### Reference signs list

- 10: Method
- 11: Requirements
- 12: Functional specifications
- 13: Hardware in the loop (HiL), software in the loop (SiL)
- 14: Vehicle driver instructions
- 15: Input and output signals, messaging
- 16: Test cases
- 18: Repository
- 20: Apparatus, test framework, computer
- 21: Editor
- 22: Decomposer
- 23: Data sequencer
- 24: Means for translating keywords into scripts
- 25: Test environment
- 26: Keywords
- 27: Scripts
- 28: Repository
- 29: Data

### Citation list

The following documents are cited hereinbefore.

### Patent literature

US 2014/033175 A (LEE CHUNG-I [TW] ET AL) 30.01.2014
US 2015/278075 A (LOGANATHAN BALAJI [US]) 01.10.2015
WO 2007/137082 A (CAPTARIS INC [US]; ROTH RICK R [US]) 29.11.2007
US 2008/244523 (KELSO TIM [US]) 02.10.2008
CN 102929680 A (ISOFT INFRASTRUCTURE SOFTWARE CO., LTD) 13.02.2013

### Non-patent literature

HAMETNER, Reinhard, et al. Agile testing concepts based on keyword-driven testing for industrial automation systems. IECON 2012 - 38th Annual Conference on IEEE Industrial Electronics Society. 25.10.2012, p.3727-3732.

## Claims

1. Computer-implemented method (10) comprising
defining requirements (11) for a system under test,
transforming the requirements (11) into functional specifications (12) using documented keywords (26), and,
driven by the keywords (26) and using the functional specifications (12) as test specifications, generating test cases (16) for the system automatically using a database (18, 28) storing the keywords (26),
wherein
the requirements (11) are defined through phrases containing the keywords (26) and syntactically construed from a hypothetical action upon the system and an expected reaction by the system to the action, the action and reaction being expressed by the phrases,
upon the keywords (26) being entered, the phrases are parameterized by means (24) of a software wizard, and
the keywords (26) and phrases are documented in the database (18, 28),
wherein
the database (18, 28) further stores translations of the keywords (26) into different test domains (13, 14, 15) comprising vehicle driver instructions (14) and is a collaborative library distributed along with the specifications (12),
the keywords (26) are qualified by prefixing system and class identifiers, and when defining the requirements (11), the keywords (26), whilst being entered, are automatically completed using the database (18, 28) by structured query thereinto.

2. Method (10) as per Claim 2
**characterized in that**
the different test domains (13, 14, 15) further comprise hardware or software in a loop (13) or input and output signals (15), for example, transmitted over a network such as Flexray or Ethernet.

3. Data processing apparatus (20) comprising a processor configured to perform the method (10) of Claim 1 or Claim 2.

4. Apparatus (20) as per Claim 3
**characterized in**
an editor (21), preferably including the wizard, connected to the database (18, 28).

5. Apparatus (20) as per Claim 4
**characterized in**
a decomposer (22) and data sequencer (23) connected to the database (18, 28) and to the editor (21).

6. Apparatus (20) as per Claim 5
**characterized in**
means (24), connected to the database (18, 28), decomposer (22), and data sequencer (23), for translating the keywords (26) and data (29) into scripts (27) implementing the test cases (16) within the different test domains (13, 14, 15).

7. Apparatus (20) as per Claim 6
**characterized in that**
the means (24) are adapted to a given test environment (25).

8. Computer program comprising instructions which, when the program is executed by a computer (20), cause the computer (20) to carry out the method (10) of Claim 1.

9. Data (29) carrier signal carrying the program of Claim 8.

## Patentansprüche

1. Computerimplementiertes Verfahren (10), umfassend das Definieren von Anforderungen (11) für ein zu testendes System, das Umwandeln der Anforderungen (11) in funktionale Spezifikationen (12) unter Verwendung dokumentierter Schlüsselwörter (26) und das Erzeugen von Testfällen (16) für das System automatisch unter Verwendung einer Datenbank (18, 28), in der die Schlüsselwörter (26) gespeichert sind, wobei die Testfälle (16) durch die funktionalen Spezifikationen (12) als Testspezifikationen erzeugt werden. unter Verwendung der Schlüsselwörter (26) und unter Verwendung der funktionalen Spezifikationen (12) als Testspezifikationen automatisches Erzeugen von Testfällen (16) für das System unter Verwendung einer Datenbank (18, 28), in der die Schlüsselwörter (26) gespeichert sind,
wobei
die Anforderungen (11) durch Phrasen definiert werden, die die Schlüsselwörter (26) enthalten und syntaktisch aus einer hypothetischen Aktion auf das System und einer erwarteten Reaktion des Systems auf die Aktion konstruiert werden, wobei die Aktion und die Reaktion durch die Phrasen ausgedrückt werden, nach Eingabe der Schlüsselwörter (26) die Phrasen mittels (24) eines Software-Assistenten parametrisiert werden und
die Schlüsselwörter (26) und Phrasen in der Datenbank (18, 28) dokumentiert werden,
wobei
die Datenbank (18, 28) ferner Übersetzungen der Schlüsselwörter (26) in verschiedene Testdomänen (13, 14, 15) speichert, die Anweisungen für Fahrzeugführer (14) umfassen, und eine kollaborative Bibliothek ist, die zusammen mit den Spezifikationen (12) verteilt wird,
die Schlüsselwörter (26) durch vorangestellte System- und Klassenbezeichner qualifiziert werden und
bei der Definition der Anforderungen (11) die Schlüsselwörter (26) während der Eingabe automatisch unter Verwendung der Datenbank (18, 28) durch strukturierte Abfragen in diese vervollständigt werden.

2. Verfahren (10) gemäß Anspruch 1,
**dadurch gekennzeichnet, dass**
die verschiedenen Testdomänen (13, 14, 15) ferner Hardware oder Software in einer Schleife (13) oder Eingangs- und Ausgangssignale (15) umfassen, die beispielsweise über ein Netzwerk wie Flexray oder Ethernet übertragen werden.

3. Datenverarbeitungsvorrichtung (20) mit einem Prozessor, der so konfiguriert ist, dass er das Verfahren (10) nach Anspruch 1 oder Anspruch 2 ausführt.

4. Vorrichtung (20) gemäß Anspruch 3,
**dadurch gekennzeichnet, dass**
ein Editor (21), vorzugsweise einschließlich des Assistenten, mit der Datenbank (18, 28) verbunden ist.

5. Vorrichtung (20) gemäß Anspruch 4,
**gekennzeichnet durch**
einen Zerleger (22) und einen Datensequenzer (23), die mit der Datenbank (18, 28) und dem Editor (21) verbunden sind.

6. Vorrichtung (20) gemäß Anspruch 5,
**gekennzeichnet durch**
ein Mittel (24), das mit der Datenbank (18, 28), dem Zerleger (22) und dem Datensequenzer (23) verbunden ist, um die Schlüsselwörter (26) und Daten (29) in Skripte (27) zu übersetzen, die die Testfälle (16) innerhalb der verschiedenen Testdomänen (13, 14, 15) implementieren.

7. Vorrichtung (20) gemäß Anspruch 6,
**dadurch gekennzeichnet, dass**
die Mittel (24) an eine bestimmte Testumgebung (25) angepasst sind.

8. Computerprogramm, das Anweisungen umfasst, die, wenn das Programm von einem Computer (20) ausgeführt wird, den Computer (20) veranlassen, das Verfahren (10) nach Anspruch 1 auszuführen.

9. Datenträger (29) mit dem Programm nach Anspruch 8.

## Revendications

1. Procédé informatique (10) comprenant :
la définition des exigences (11) d'un système à tester ;
la transformation des exigences (11) en spécifications fonctionnelles (12) à l'aide de mots-clés documentés (26) ;
et, à l'aide des mots-clés (26) et des spécifications fonctionnelles (12) servant de spécifications de test, la génération automatique de cas de test (16) pour le système à partir d'une base de données (18, 28) stockant les mots-clés (26) ;
les exigences (11) sont définies par des phrases contenant les mots-clés (26) et construites syntaxiquement à partir d'une action hypothétique sur le système et d'une réaction attendue de celui-ci à cette action, l'action et la réaction étant exprimées par les phrases ;
après la saisie des mots-clés (26), les phrases sont paramétrées au moyen (24) d'un assistant logiciel ;
et les mots-clés (26) et les phrases sont documentés dans la base de données (18, 28) ;
la base de données (18, 28) stocke également les traductions des Les mots clés (26) sont intégrés à différents domaines de test (13, 14, 15) comprenant les instructions du conducteur (14) et une bibliothèque collaborative distribuée avec les spécifications (12) ;
ces mots clés (26) sont qualifiés par un préfixe d'identifiants de système et de classe ;
lors de la définition des exigences (11), les mots clés (26) sont automatiquement complétés à l'aide de la base de données (18, 28) par une requête structurée.

2. Procédé (10) selon la revendication 1
**caractérisé en ce que**
les différents domaines de test (13, 14, 15) comprennent en outre du matériel ou un logiciel en boucle (13) ou des signaux d'entrée et de sortie (15), par exemple, transmis sur un réseau tel que FlexRay ou Ethernet.

3. Appareil de traitement de données (20) comprenant un processeur configuré pour exécuter le procédé (10) de la revendication 1 ou la revendication 2.

4. Appareil (20) selon la revendication 3
**caractérisé par**
un éditeur (21), comprenant de préférence un assistant, connecté à la base de données (18, 28).

5. Appareil (20) selon la revendication 4
**caractérisé par**
un décomposeur (22) et un séquenceur de données (23) connectés à la base de données (18, 28) et à l'éditeur (21).

6. Appareil (20) selon la revendication 5
**caractérisé en ce que**
des moyens (24), connectés à la base de données (18, 28), au décomposeur (22) et au séquenceur de données (23), permettent de traduire les mots-clés (26) et les données (29) en scripts (27) implémentant les cas de test (16) dans les différents domaines de test (13, 14, 15).

7. Appareil (20) selon la revendication 6
**caractérisé en ce que**
les moyens (24) sont adaptés à un environnement de test donné (25).

8. Programme informatique comprenant des instructions qui,
lorsqu'il est exécuté par un ordinateur (20), amènent ce dernier à mettre en œuvre le procédé (10) de la revendication 1.

9. Signal porteur de données (29) transportant le programme de la revendication 8.
